# FASCICULE DE BREVET EUROPEEN

(11) **EP 3 391 968 B1**
(45) Date de publication et mention de la délivrance du brevet: **13.05.2020**
(21) Numéro de dépôt: 18168078.6
(22) Date de dépôt: 18.04.2018
(51) Int. Cl.: B01L 3/00, G01N 21/11, G01N 1/40, G01N 1/28, G01N 21/03, G01N 21/65, G01N 15/00, G01N 15/14, G01N 15/10, G01N 21/64

(54) **DEPOSITION CONVECTIVE-CAPILLAIRE D'UN ECHANTILLON DE BACTERIES EN VUE D'UNE ANALYSE AUTOMATISEE PAR SPECTROMETRIE RAMAN**
KONVEKTIVE KAPILLARABSCHEIDUNG EINER BAKTERIENPROBE ZUR SELBSTTÄTIGEN RAMANSPEKTROSKOPIE
CONVECTIVE-CAPILLARY DEPOSITION OF A BACTERIA SAMPLE FOR AUTOMATED RAMAN SPECTROSCOPY

(30) Priorité: 21.04.2017 FR 1753483
(43) Date de publication de la demande: 24.10.2018
(73) Titulaire: Commissariat à l'énergie atomique et aux énergies alternatives, 75015 Paris (FR)
(72) Inventeur: SCHULTZ, Emmanuelle, 38120 SAINT-EGREVE (FR); BARITAUX, Jean-Charles, 38170 SEYSSINET-PARISET (FR); CORDEIRO, Julien, 38000 GRENOBLE (FR); PEYRADE, David, 38430 MOIRANS (FR)
(74) Mandataire: Brevalex

(56) Documents cités:
- FR-A1- 2 943 785
- US-A1- 2009 093 374
- DAGUE E ET AL: "Assembly of live micro-organisms on microstructured PDMS stamps by convective/capillary deposition for AFM bio-experiments", NANOTECHNOLOGY, IOP, BRISTOL, GB, vol. 22, no. 39, 2 septembre 2011 (2011-09-02), page 395102, XP020210674, ISSN: 0957-4484, DOI: 10.1088/0957-4484/22/39/395102
- MEHMET KAHRAMAN ET AL: "Convective Assembly of Bacteria for Surface-Enhanced Raman Scattering", LANGMUIR, vol. 24, no. 3, 1 février 2008 (2008-02-01), pages 894-901, XP055439751, US ISSN: 0743-7463, DOI: 10.1021/la702240q
- HUI LU ET AL: "Highly uniform SERS-active microchannel on hydrophobic PDMS: a balance of high reproducibility and sensitivity for detection of proteins", RSC ADVANCES: AN INTERNATIONAL JOURNAL TO FURTHER THE CHEMICAL SCIENCES, vol. 7, no. 15, 27 janvier 2017 (2017-01-27), pages 8771-8778, XP055475500, GB ISSN: 2046-2069, DOI: 10.1039/C6RA25173K

## Description

### DOMAINE TECHNIQUE ET ÉTAT DE LA TECHNIQUE ANTÉRIEURE

La présente invention se rapporte à un procédé de préparation d'un échantillon de bactéries en vue d'une analyse par spectrométrie Raman.

L'effet Raman est mis en œuvre pour recueillir une information biochimique spécifique des bactéries analysées. Une mesure par spectrométrie Raman consiste à éclairer un objet avec un faisceau laser à une longueur d'onde donnée, et à mesurer la lumière émise par l'objet sur une plage de longueur d'onde encadrant la longueur d'onde du laser (spectre Raman).

Dans le domaine de la microbiologie, la spectrométrie Raman permet d'identifier l'espèce et/ou la souche des micro-organismes (bactéries, levures) analysées. Les informations recueillies par spectrométrie Raman, c'est-à-dire les spectres, sont regroupées en base de données. Celles-ci sont soumises à des modèles statistiques pour une première phase d'apprentissage. Un nouveau spectre inconnu pourra alors être testé par comparaison à cette base de données pour donner un résultat d'identification de l'espèce ou de la souche bactérienne.

Pour pouvoir analyser ces bactéries, celles-ci sont déposées sur un substrat ou lame.

Il existe plusieurs techniques de dépôt de particules.

L'une des techniques consiste à déposer une goutte d'une solution contenant les bactéries à analyser sur la surface du substrat, puis à laisser évaporer la solution. Les bactéries se retrouvent alors sur le substrat. Cette technique a pour inconvénient que les bactéries sont réparties aléatoirement sur la surface du substrat et généralement sous forme d'agrégats, alors que l'on cherche de préférence à séparer les bactéries les unes des autres pour faire une mesure individuelle.

Une autre technique décrite dans le document Controlling the shape of Filamentous Cells of Escherichia coli, S. Takeuchi et al., Nano Letters 2005 Vol.5, No.9 1819-1823 consiste à piéger les bactéries dans un substrat comportant des microchambres, fermées par un couvercle. Les bactéries vont croître dans les microchambres. Cette technique offre un mauvais rendement, seule une petite partie des microchambres contiennent des bactéries, et les bactéries sont sous forme d'agrégat.

Un autre technique décrite dans le document Attachment of Motile Bacterial Cells to Prealigned Holed Mircoarrays, S. Rozhok et al., Langmuir, 2006, 22, 11251-11254 consiste à utiliser un substrat en silicium structuré comportant des cavités fonctionnalisés chimiquement afin de piéger les bactéries, le substrat est ensuite immergé dans une solution contenant les bactéries qui vont être piégées par fonctionnalisation dans les cavités. Cette technique offre un bon taux de remplissage. Mais le ou les matériaux utilisés pour la fonctionnalisation peuvent produire un signal Raman qui peut perturber le signal Raman de la bactérie.

Une autre technique met en œuvre des pinces optiques piégeant les bactéries (appelées laser tweezers en terminologie anglo-saxonne). Cette technique a pour inconvénient un montage optique complexe et un risque de dommage laser sur les bactéries. En outre un substrat en silicium non adapté à l'analyse Raman est mis en œ uvre.

Il existe des systèmes d'analyse par spectrométrie Raman capables de générer un faisceau lumineux, les bactéries ou agglomérat de bactéries sont éclairés séquentiellement. Dans le cas où les bactéries sont réparties aléatoirement sur le support, une étape de repérage des bactéries est requise, une analyse automatique n'est alors pas envisageable.

Il existe également systèmes d'analyse par spectrométrie Raman capables de générer plusieurs faisceaux lumineux capables d'éclairer simultanément plusieurs zones comportant une ou des bactéries. Dans ce cas la répartition des bactéries doit être préalablement connue et de préférence la répartition est sous forme de schéma connu. En outre une telle analyse a un intérêt lorsqu'un grand nombre de bactéries sont analysables simultanément.

Or, avec les procédés d'assemblage de l'état de la technique, la répartition des bactéries n'est pas connu ou prédictible et/ou le nombre de bactéries qui peut être analysé simultanément n'est pas suffisant du fait du faible rendement du procédé.

Dans le cas d'une acquisition de spectres Raman de manière séquentielle, le temps d'analyse pour chaque échantillon peut être de plusieurs minutes par échantillon. De plus, l'échantillonnage est restreint à quelques dizaines d'individus par exemple 10 et au maximum 20, ce qui n'est pas représentatif de la diversité biologique des bactéries individuelles. Dans une phase de construction de base de données de référence, il est donc nécessaire de multiplier les mesures (nombre d'échantillons, mais aussi nombre de campagnes d'expérience). Dans une phase d'utilisation sur le terrain, le risque est grand de manquer un évènement rare.

Le document "Assembly of live micro-organisms on microstructured PDMS stamps by convective/ capillary déposition for AFM bio-experiments", E. Dague et al., Nanotechnology 2011, Vol.22, 395102, divulgue un procédé de l'art antérieur d'assemblage de micro-organisme par convection capillarité. Le document "Convective Assembly of Bacteria for Surface-Enhanced Raman Scattering", M. Kahraman et al., Langmuir 2008, 24, 894-901 divulgue un procédé de l'art antérieur de spectrométrie Raman.

### EXPOSÉ DE L'INVENTION

C'est par conséquent un but de la présente invention d'offrir un procédé de préparation d'échantillons de microorganismes permettant l'assemblage sur un support adapté à l'analyse par spectrométrie Raman, de mise en œuvre simple, offrant un assemblage selon une répartition connue et ayant un rendement d'assemblage élevé.

Le but énoncé ci-dessus est atteint par un procédé de préparation, dans lequel le support comporte sur une de ses faces des motifs en creux de la surface de ladite face selon une répartition donnée, les motifs en creux ayant une taille adaptée pour recevoir une ou des bactéries de taille donnée, et le support est en un matériau adapté à la mesure Raman. L'assemblage des bactéries dans les motifs en creux se fait par force de capillarité contrôlée.

En d'autres termes, on réalise un assemblage des bactéries selon un arrangement prédéterminé sur un substrat pour obtenir une répartition spatialement homogène et déterminée des bactéries, ce qui peut par exemple permettre de réaliser une analyse Raman de manière automatisée sur un grand nombre de bactéries, de manière séquentielle ou très avantageusement de manière simultanée. L'établissement rapide de bases de données est alors possible. En outre, l'assemblage sur un support avec un rendement d'assemblage important permet de rendre quasiment exhaustive, voire exhaustive l'analyse des bactéries d'un milieu. En effet on peut envisager de faire de 50 à 100 mesures simultanément par exemple. Le procédé d'assemblage augmente les chances de détecter un évènement rare. Au contraire, l'analyse de bactéries de l'état de la technique se faisant sur des agrégats de bactéries réparties aléatoirement, le nombre d'analyses est très réduit, par exemple 10, et la probabilité de ne pas détecter un évènement rare est élevée.

Le procédé selon l'invention présente l'avantage de maîtriser le nombre de bactéries qui sera assemblé à chaque emplacement, il est par exemple envisageable d'assembler une bactérie à chaque emplacement et de réaliser une mesure Raman individuelle sur chaque bactérie. Le problème des agrégats de bactéries résultant des procédés de préparation de l'état de la technique ne se pose plus.

La répartition des bactéries sur le support est obtenue par piégeage physique des bactéries dans des creux et non par piégeage au moyen d'une fonctionnalisation chimique ou électrostatique. Il n'y a donc pas de consommable. En outre, il n'y a pas de risque de perturber la mesure Raman par un signal non spécifique issu de la fonctionnalisation.

L'absence de préparation du support avant le procédé d'assemblage simplifie l'assemblage et rend le procédé plus rapide.

Grâce à l'invention, on peut appliquer l'analyse par spectrométrie Raman à un grand nombre de bactéries de manière automatique, séquentiellement, très avantageusement à plusieurs bactéries assemblées simultanément et encore plus avantageusement à toutes les bactéries assemblées simultanément.

La présente invention a alors pour objet un procédé de préparation d'un échantillon de microorganismes en vue d'une analyse par spectrométrie Raman comportant les étapes divulguées dans la revendication 1.

De préférence, lors de l'étape b), le support est à une température donnée et l'air contenu dans la cavité est aspiré.
Par example, la solution liquide comporte du Triton X-100®.

De manière préférée, les motifs en creux sont répartis en lignes et en colonnes.

Dans un exemple de réalisation, le support comporte au moins des motifs en creux de forme rectangulaire et présentant une longueur et une largeur, lesdits motifs étant délimités par des bords, les bords en regard de deux motifs en creux adjacents étant distants d'une distance égale à au moins 5 fois la longueur des motifs en creux.

Dans un autre exemple de réalisation, le support comporte au moins des motifs en creux de forme circulaire présentant un diamètre et comportant un bord extérieur, les bords en regard de deux motifs adjacents étant distants d'une distance égale à au moins 5 fois le diamètre des motifs en creux.

Le support peut comporter des motifs de tailles différentes.

De manière avantageuse, les dimensions des motifs en creux dans un plan moyen du support sont déterminées de sorte à ne recevoir qu'une bactérie.

Au moins une des dimensions des motifs en creux dans un plan moyen du support est avantageusement supérieure ou égale à 2 µm.

De préférence, chaque motif en creux a une dimension dans une direction perpendiculaire à un plan moyen du support au moins égale à la demi-hauteur de bactéries à assembler.

La présente invention a également pour objet un procédé d'analyse Raman de bactéries comportant
- la préparation d'un échantillon de bactéries mettant en œuvre le procédé selon l'invention,
- la mise en place de l'échantillon dans un système d'analyse par spectrométrie Raman selon une orientation donnée,
- l'illumination d'un ou plusieurs motifs pour l'analyse Raman,
- la mesure de la lumière émise par les bactéries contenues dans le ou les motifs

Dans un exemple de réalisation, l'illumination d'un ou plusieurs motifs comporte l'illumination successive de chaque motif

Dans un autre exemple de réalisation, l'illumination d'un ou plusieurs motifs comporte l'illumination simultanée de plusieurs motifs.

Avantageusement, on prévoit que l'illumination d'un ou plusieurs motifs soit automatique.

Le procédé d'analyse peut comporter l'étape supplémentaire d'établissement d'une base de données ou de comparaison des mesures obtenues à ceux d'une base de données pour identifier la ou les bactéries analysées.

### BRÈVE DESCRIPTION DES DESSINS

La présente invention sera mieux comprise sur la base de la description qui va suivre et des dessins en annexe sur lesquels:
- la figure 1 est une vue de dessus d'un support d'assemblage mis en œuvre dans le procédé selon l'invention,
- la figure 2 est une vue de dessus d'un exemple de réalisation d'un dispositif d'assemblage de bactéries mis en œuvre dans la procédé d'assemblage selon l'invention,
- la figure 3A est une vue en coupe longitudinale du dispositif d'assemblage de la figure 2,
- les figures 3B et 3C sont des vues de détail de la figure 3A,
- les figures 4A à 4C sont des vues de dessus de détail de supports aptes à accueillir des bactéries de différentes formes,
- la figure 5A est une représentation graphique des spectres Raman moyens lissés normalisés obtenus sur un échantillon de *B*. *subtilis* préparé par évaporation non contrôlée d'une goutte de liquide sur un support et sur un échantillon de *B. subtilis* préparation avec le procédé selon l'invention,
- la figure 5B est une représentation graphique des spectres Raman moyens lissés normalisés obtenus sur un échantillon de *E. coli* préparé par évaporation non contrôlée d'une goutte de liquide sur un support plan et sur un échantillon de E. coli préparé avec le procédé selon l'invention,
- les figures 6A et 6B sont des représentations graphiques de spectres Raman obtenus sur un échantillon de E. coli préparé par évaporation non contrôlée d'une goutte de liquide sur un support plan et sur un échantillon préparé avec le procédé selon l'invention respectivement,
- les figures 6C et 6D sont des représentations graphiques de spectres Raman bruts obtenus sur un échantillon de *B*. *subtilis* préparé par évaporation non contrôlée d'une goutte de liquide sur un support plan et sur un échantillon préparé avec le procédé selon l'invention respectivement,
- les figures 6E et 6F sont des représentations graphiques de spectres Raman obtenus sur un échantillon de *B*. *cereus* préparé par évaporation non contrôlée d'une goutte de liquide sur un support plan et sur un échantillon préparé avec le procédé selon l'invention respectivement,
- les figures 7A et 7B sont des représentations graphiques de spectres Raman obtenus sur un échantillon de *B*. *subtilis* et *B*. *cereus* préparé avec le procédé selon l'invention respectivement, sur un support en quartz non fonctionnalisé et sur un support en quartz fonctionnalisé avec de l'Optool®,
- la figure 8 est une vue de dessus d'un autre exemple de support pouvant être mis en œuvre dans le procédé selon l'invention.

### EXPOSÉ DÉTAILLÉ DE MODES DE RÉALISATION PARTICULIERS

Dans la présente demande, on entend par « microorganismes » des bactéries et des champignons dans des matrices pures ou réelles.

Dans la description qui va suivre, le terme « bactérie » est utilisé pour désigner à la fois les bactéries et les champignons.

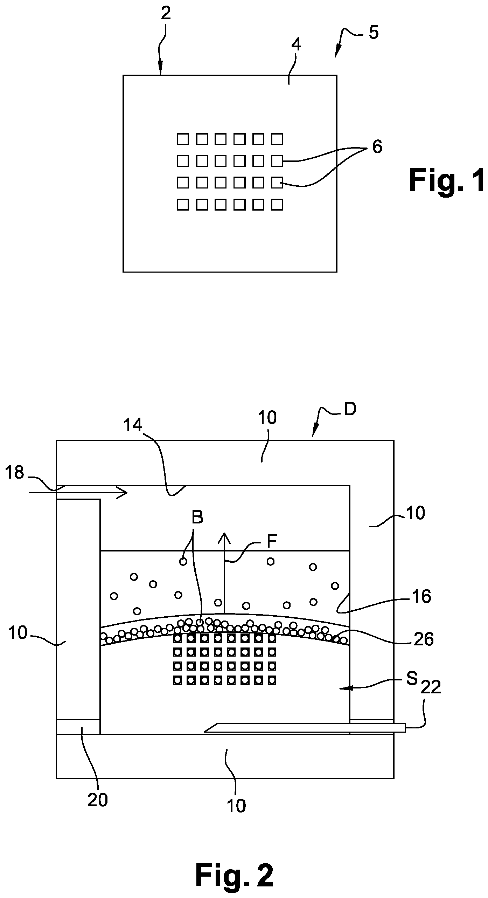

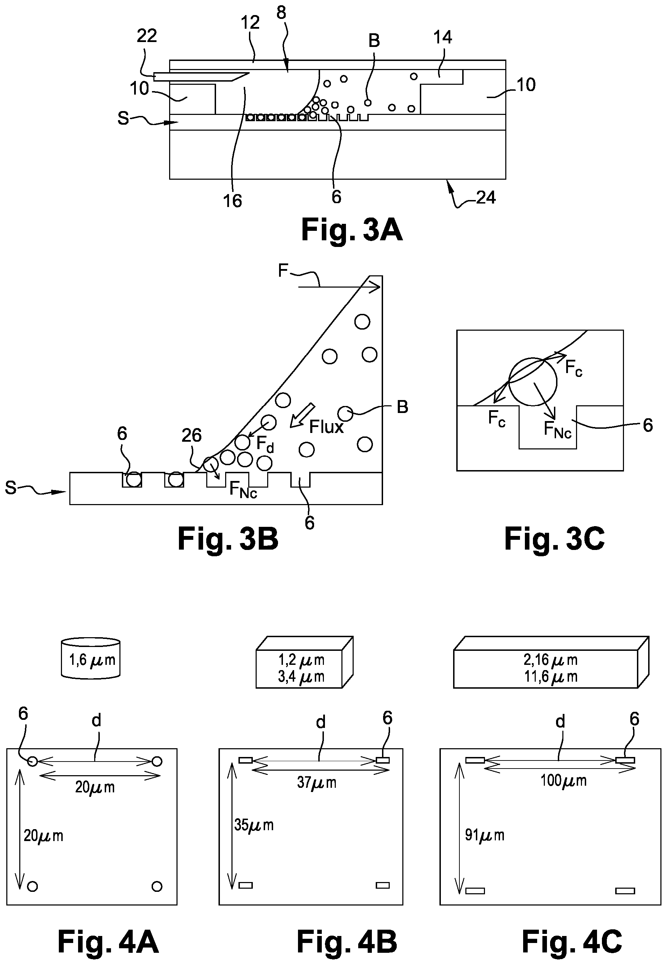

Sur les figures 1 et 3C, on peut voir un exemple d'un ensemble selon l'invention comportant un dispositif pour l'assemblage de bactéries sur un support d'assemblage.

Sur la figure 1, on peut voir, vu de dessus, un exemple de support d'assemblage S. Il comporte une plaque 2 comprenant une première face 4 et une deuxième face (non visible) opposée à la première face.

Le support est réalisé dans un matériau adapté à la spectrométrie Raman.

Dans la présente demande, on entend par « matériau adapté à la spectrométrie Raman » un matériau qui ne gêne pas les mesures par spectrométrie Raman, i.e. dont la signature Raman est négligeable par rapport à celle des bactéries analysées ou dont la signature est située en dehors de la zone d'intérêt qui inclut les deux régions spectrales suivantes : 500 cm⁻¹-1700 cm⁻¹ et 2600 cm⁻¹-3200 cm⁻¹.

De préférence, le support est un milieu dont la transmission dans la gamme 400 nm à 700 nm est supérieure ou égale à 30%.

De manière avantageuse le support S est également transparent au rayonnement visible pour permettre son alignement avec le système d'analyse Raman. En effet comme cela sera décrit par la suite, la connaissance de la position des motifs des supports pourra être utilisée lors de l'analyse.

Le support S est en quartz. Le quartz produit un signal Raman non spécifique faible et non gênant pour les modèles statistiques utilisés pour identifier les bactéries.

En variante qui ne fait pas partie de l'invention, le support pourrait être en verre recouvert par une couche métallique en aluminium ou en nickel par exemple.

La première face comporte des motifs en creux 6 répartis sur tout ou partie de la première face 4. Sur la figure 3A, on peut voir une vue en coupe longitudinale le support S et les motifs en creux 6.

Le dispositif d'assemblage D comporte une cavité 8 délimitée par des parois latérales 10 et un fond supérieur 12. La cavité 8 est ouverte au niveau de son fond inférieur opposé au fond supérieur 12. Le support S est destiné à former le fond inférieur de la cavité lors d'un procédé d'assemblage.

La cavité 8 est divisée en deux chambres 14, 16 communicant l'une avec l'autre. La chambre 14 forme la chambre d'injection et la chambre 16 forme la chambre d'assemblage.

La chambre d'injection 14 est telle qu'elle présente un fond inférieur 14.1, par exemple formé dans une des parois latérales 10 de sorte que, lorsque la solution liquide contenant les bactéries est injectée dans la chambre d'injection 14, elle n'entre pas en contact avec le support.

La chambre d'assemblage 16 est telle que son fond inférieur est formé par le support d'assemblage S.

Le dispositif comporte également un canal d'injection 18 débouchant dans la chambre d'injection 14, un canal 20 formant évent débouchant dans la chambre d'assemblage 16 et un canal d'aspiration 22 débouchant dans la chambre d'assemblage 16.

L'évent 20 et le canal d'aspiration 22 sont disposés de sorte qu'ils ne soient pas obturés par le liquide injecté dans la cavité comme cela sera décrit ci-dessous.

Le canal d'injection 20 peut être prévu à la fabrication ou être formé lors de l'injection, par exemple au moyen d'une aiguille.

De préférence, un dispositif de contrôle 24 de la température du support pour contrôler la vitesse d'évaporation.

Le canal d'aspiration 22 est destiné à être relié à un système d'aspiration de l'air saturé en humidité contenu dans la cavité, par exemple une pompe, permettant de réguler le taux d'humidité au niveau de la ligne triple 26 (interface triple entre l'air, le liquide et la surface solide).

Les motifs en creux ont une répartition donnée, i.e. l'emplacement individuel de chaque motif en creux est localisé, permettant ainsi de programmer le système Raman pour déplacer la sonde de manière automatique sur tout ou partie des motifs en creux. De préférence, les motifs en creux sont répartis de manière régulière.

Dans l'exemple représenté et de manière préférée, les motifs en creux sont répartis sous forme de matrice en ligne et en colonne dans la première face.

La section des motifs et ses dimensions dans un plan parallèle au plan du support adapté à la forme et à la taille des bactéries.

Par exemple on considère trois formes de bactérie :
- une première forme est la forme circulaire, le motif a alors une section circulaire, ce sont par exemple les bactéries Se (staphulococcus),
- une deuxième forme est la forme légèrement allongée, le motif a alors une forme rectangulaire dont la longueur est un peu plus grande que la largeur, ce sont par exemple les bactéries Ec (*Escherichia coli*) et Sm (*Serratia marcescens*),
- une troisième forme est la forme allongée, le motif a alors une forme rectangulaire dont la longueur est sensiblement plus grande que la largeur, ce sont par exemple les bactéries Bs (*Bacillus Subtilis*).

Un détail d'un support d'assemblage selon l'invention est représenté sur les figures 4A, 4B et 4C.

Sur la figure 4A, les motifs ont une section circulaire, sur la figure 4B les motifs ont on section rectangulaire peu allongée et enfin sur la figure 4C, les motifs ont une section rectangulaire très allongée.

De manière très avantageuse, les bords de deux motifs adjacents d'une même ligne ou d'une même colonne sont séparés d'une distance d qui est au moins égale à 5 fois la plus grande dimension du motif et de préférence de l'ordre de 10 fois la plus grande dimension du motif. Ce choix d'une distance minimale entre les motifs permet d'assurer un remplissage des motifs avec un rendement important. Le rendement peut être au moins supérieur à 80%. Par exemple un rendement d'assemblage de 99% a pu être obtenu pour un échantillon de bactéries E. coli. A l'inverse dans le cas de motifs trop rapprochés il a été constaté que le remplissage n'était pas homogène, car une grande quantité de bactéries étaient assemblées en même temps et le renouvellement des bactéries n'étaient pas assez rapide pour remplir toutes les cavités suivantes.

Dans le cas des motifs circulaire de la figure 4A, d est égale à au moins 5 fois le diamètre du motif.

Dans le cas des motifs des figures 4B et 4C, d est égale à au moins 5 fois la longueur des motifs.

Par exemple pour un motif circulaire de diamètre égal à 1,6 µm, la distance entre deux bords en regard de deux motifs d'une même ligne ou d'une même colonne peut être égale à 20 µm

Dans le cas des motifs de la figure 4B ayant une largeur de 1,2 µm et une longueur de 3,4 µm, la distance d peut être par exemple comprise entre 35 µm et 37 µm.

Dans le cas des motifs de la figure 4C ayant une largeur de 2,16 µm et une longueur de 11,6 µm, la distance d peut être par exemple comprise entre 91 µm et 100 µm.

De manière préférée, les dimensions intérieures des motifs sont telles qu'elles permettent d'accueillir une ou plusieurs bactéries. Les dimensions intérieures comprennent les dimensions dans le plan moyen du support et la profondeur qui est orientée perpendiculairement au plan du support.

Le nombre de motifs varie selon leur géométrie :
- il est de 10201 motifs lorsque le motif est circulaire de 1,6 µm de diamètre,
- il est de 3135 motifs lorsque le motif est rectangulaire de 3,4 µm de longueur et 1,2 µm de largeur,
- il est de 483 motifs, lorsque le motif est rectangulaire de 11,6 µm de longueur et 2,16 µm de largeur.

Le procédé de préparation d'échantillons selon l'invention présente l'avantage d'être adapté à l'assemblage de bactéries de toute taille.

Dans le cas où l'on souhaite accueillir une seule bactérie par motif, les dimensions intérieures du motif dans le plan du support sont de préférence légèrement inférieures à 2 fois les dimensions extérieures de la bactérie.

Dans le cas où l'on souhaite accueillir deux bactéries par motif, de préférence, les dimensions intérieures dans le plan du support sont de l'ordre de 2 fois les dimensions extérieures de la bactérie. Par exemple dans le cas d'une bactérie de forme circulaire, le diamètre du motif est de l'ordre de 2 fois le diamètre extérieur de la bactérie, par exemple pour une bactérie de diamètre 0,8 µm, le diamètre est au plus de 1,6 µm.

Dans le cas d'une bactérie de forme allongée de longueur 1,6 µm et de largeur 0,8 µm, le motif a par exemple une longueur de 3,4 µm et une largeur de 1,2 µm.

Dans le cas d'une bactérie de forme allongée de longueur 6 µm et de largeur 1,3 µm, le motif a par exemple une longueur de 11,6 µm et une largeur de 2,16 µm.

De préférence également, la profondeur des motifs, i.e. la dimension des motifs dans une direction perpendiculaire au plan du support, est au moins égale à la moitié de la hauteur des bactéries à assembler pour éviter qu'elles ne s'échappent des motifs.

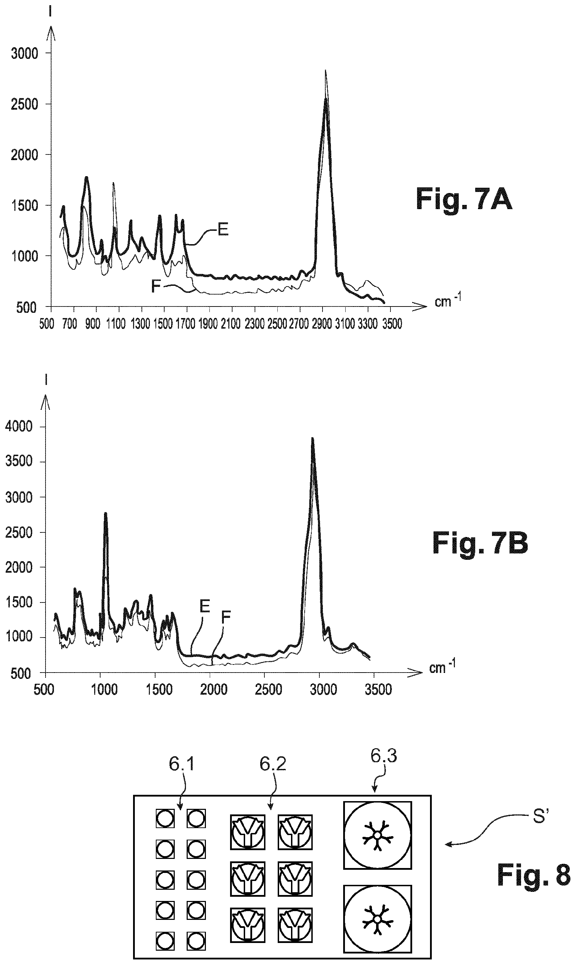

Le support peut avantageusement comporter des motifs de tailles différentes comme cela est représenté sur la figure 8, permettant d'assembler sur le même support des bactéries de tailles différentes et également de faire un tri. Le support S' de la figure 8 comporte trois groupes de motifs en creux 6.1 ,6.2, 6.3 de tailles différentes. Les bactéries sont assemblées dans les motifs.

On entend par taille de motifs, la surface des motifs dans le plan moyen.

Les motifs de même taille sont regroupés. De préférence, les motifs sont répartis de sorte à créer des motifs avec un gradient de taille en commençant par des lignes de motifs de petites tailles et en finissant par les lignes de motifs de grande taille. Le procédé d'assemblage débute alors par l'assemblage des bactéries de plus petite taille. Le support est monté dans le dispositif de sorte que, lors de l'évaporation, la ligne triple se déplace dans le sens des motifs de taille croissante, des motifs 6.1 aux motifs 6.3 dans l'exemple de la figure 8. Ainsi les bactéries de plus petites tailles se déposent chacune dans un motif 6.1, puis ce sont les bactéries de taille intermédiaire qui se déposent dans les motifs 6.2 et enfin les bactéries de plus grande taille se déposent dans les motifs 6.3.

Par exemple, les motifs 6.1 logent des bactéries de l'ordre 500 nm de diamètre, les motifs 6.1 logent des bactéries de l'ordre de 1 µm de diamètre et les motifs 6.3 logent des bactéries de l'ordre de 2 µm de diamètre.

Les tailles des différents motifs sont choisies suffisamment différentes pour assurer un tri efficace. Dans l'exemple de la figure 8, un rapport de 2 existe entre les tailles des motifs directement voisins.

Le support S' de la figure 8 comporte des motifs de même forme, i.e. de forme carrée. Un support comportant des motifs de différentes formes et de différentes tailles ne sort pas du cadre de la présente invention.

Le support S', et plus généralement un support avec des motifs de plusieurs tailles, peut servir au tri de bactéries et plus généralement de microorganismes, voire de particules, sans nécessairement être mise en œuvre pour une analyse Raman.

La première face du support est telle que l'angle de contact de reculée entre la solution liquide contenant les bactéries et la première face du support est compris entre 30° et 50°, de préférence entre 30° et 45°. L'angle de contact de reculée correspond à l'angle de contact entre le liquide contenant les bactéries, la première face du support et l'air lorsque la ligne triple recule sous l'effet de l'évaporation.

On peut envisager que le matériau de la première face présente directement des propriétés de mouillage vis-à-vis de la solution liquide telles que l'angle de reculée est compris entre 30° et 50°.

Un traitement de surface est appliqué à la première face pour lui procurer les propriétés de mouillage attendues.

La première face est traitée de sorte à présenter un caractère hydrophobe, i.e. un angle de contact entre une goutte de solution aqueuse et une surface supérieur à 90°, et la solution liquide est choisie de sorte que l'angle de reculée soit entre 30° et 50°. La fonctionnalisation a pour but de fixer la valeur de l'angle de reculée et non de piéger les bactéries.

La première face est traitée avec de l'Optool®.

L'Optool® présente également l'avantage de ne pas perturber les mesures Raman. En effet, des spectres Raman sur des bactéries assemblées sur un support sans fonctionnalisation et sur un support fonctionnalisé avec l'Optool ont été réalisés, ceux-ci sont quasiment identiques comme on peut le voir sur les spectres des figures 7A et 7B. La figure 7A porte sur l'analyse de B. sutbilis et la figure 7B porte sur l'analyse de Bacillus cereus. Les courbes E sont obtenues avec des bactéries assemblées sur un support en quartz fonctionnalisé avec de l'Optool® et les courbes F sont obtenues avec des bactéries assemblées sur un support en quartz non fonctionnalisé.

De manière encore plus avantageuse, la solution liquide comporte du Triton X-100®. Le Triton X-100 a pour avantage de ne pas avoir d'influence sur le spectre Raman. En effet il est à noter qu'il se peut qu'il reste des traces de la solution liquide après évaporation, notamment en surface des bactéries. De plus, elle peut aussi être « ingérée» ou passer dans la membrane de la bactérie et ainsi modifier le spectre Raman. Il est donc préférable de choisir une solution liquide qui n'a pas ou peu d'influence sur le spectre Raman.

En variante, la solution liquide peut comporter un mélange de sodium dodecyl sulfate (SDS) et de Triton X-45® offrant un angle de reculée avec l'Optool® entre 30° et 50°.

Le procédé d'assemblage de bactéries contenues dans une solution sur un support S avec le dispositif D va maintenant être décrit à l'aide des figures 2 à 3C.

Le dispositif D est tout d'abord disposé sur le support S. Une étanchéité est de préférence réalisée entre le dispositif D et le support S.

Le dispositif d'assemblage D met en œuvre l'assemblage par force de capillarité ou CFA pour Capillary Force Assembly en terminologie anglo-saxonne.

Lors d'une première étape, la solution liquide contenant les bactéries B à assembler est injectée dans la chambre d'injection 14 par le canal d'injection 18, le liquide s'écoule de la chambre d'injection 14 vers la chambre d'assemblage 16. Le volume de liquide injecté est choisi par rapport au volume de la chambre, et est tel que le liquide recouvre la première face du support sur lequel on veut déposer les bactéries. En outre, le volume de liquide est tel qu'il comporte un seul ménisque. De plus le volume est tel que ni l'évent 20, ni le canal d'aspiration 22 n'est obturé par le liquide.

Lors d'une étape suivante, l'évaporation du liquide au niveau du ménisque est provoquée de manière contrôlée. Pour cela l'aspiration est activée par le canal d'aspiration 22 et la température du support est contrôlée. Ainsi le taux d'humidité au-dessus du support et la vitesse d'évaporation sont contrôlés.

Lors de l'évaporation du liquide, deux forces agissent principalement sur les particules. La force hydrodynamique d'entraînement désignée Fd sur la figure 3B, qui transporte les bactéries B vers la ligne triple 26 du fait des mouvements de convection à l'intérieur du volume de liquide. Les bactéries sont alors concentrées à la ligne triple et sont ensuite poussées par la force de capillarité, désignée FNc sur la figure 3C perpendiculairement au ménisque de liquide. Les bactéries sont alors déposées dans le fond des motifs.

La ligne triple dans une seule direction se déplace dans un seul sens du fait de l'évaporation contrôlée selon la direction désignée par la flèche F, vers la droite dans la représentation de la 3A et vers le haut dans la représentation de la figure 2, les motifs sont remplis au fur et à mesure du déplacement de la ligne triple 26.

En maîtrisant la direction d'évaporation, le taux d'humidité et la température du support, on obtient un dépôt de bactéries dans les motifs, avec un taux de remplissage élevé et une grande reproductibilité.

A titre d'exemple, des bactéries Escherichia coli de taille 0,7 µm x 1 µm, des Bacillus subtilis de taille 1 µm x10 µm et des staphylococcus epidermidis de diamètre 0,7 µm ont été assemblés sur un support en quartz. Des observations SEM ont permis de vérifier la présence de bactéries dans les motifs. Les rendements de remplissage ou d'assemblage ont été mesurés, le nombre de motifs remplis par une ou plusieurs bactéries a été compté. Pour les bactéries, un rendement de remplissage de 99% a été mesuré. Dans le cas des bactéries Bs, on estime que le rendement est de l'ordre de 50 %.

La distance entre les motifs est par exemple de 20 µm pour les plus petits motifs (1,6 µm de diamètre), 37 µm pour les motifs intermédiaires (1,2 µm x 3,4 µm), et 100 µm pour les plus grands motifs (11,20 µm x 2,16 µm).

Lorsque l'assemblage des bactéries sur le support est terminé, le dispositif est retiré et le support est monté dans un système d'analyse Raman.

Le support est de préférence monté selon une orientation donnée. En outre, la disposition relative des motifs sur le support est connue du système d'analyse, le système connaît donc l'emplacement de chaque motif en creux et peut alors de déplacer la sonde sur le support au niveau de chaque motif.

Grâce à l'invention, les bactéries sont localisées dans les motifs, et non entre les motifs, et grâce à un taux de remplissage important des motifs on sait qu'à chaque motif, la probabilité est grande qu'il y ait au moins une bactérie. En outre, en choisissant la taille des motifs, on peut individualiser les bactéries ou obtenir un petit nombre de bactéries par motif au contraire des agrégats de bactéries obtenues par des techniques connues.

Lors de l'analyse il n'est donc plus nécessaire de faire un repérage préalable pour connaître l'emplacement des bactéries, ce repérage nécessitant la mise en œuvre de marqueurs SERS. En effet, la sonde peut être orientée directement sur les motifs, ceux-ci ayant une forte probabilité de contenir une ou plusieurs bactéries. Le procédé de préparation des échantillons est donc compatible avec une analyse par spectrométrie Raman spontanée.

Grâce au fait de pouvoir placer une bactérie par motif, et donc d'analyser une bactérie à la fois, il est possible de détecter une bactérie pathogène, et plus généralement un événement rare. Le procédé permet donc d'abaisser les limites de détection.

Pour l'analyse il est possible de faire une analyse séquentielle ou point par point des bactéries, la sonde éclairant successivement chaque motif et un faisceau émis par la bactérie étant collecté et ensuite traité. Connaissant la répartition des motifs et donc des bactéries, une analyse séquentielle automatisée peut être réalisée. Le déplacement de la sonde est par exemple contrôlé par un ordinateur dans lequel a été chargée la disposition des motifs.

Selon une variante très avantageuse, on peut prévoir d'illuminer simultanément plusieurs motifs, par exemple entre 50 motifs et 100 motifs, voire tous les motifs et ainsi réaliser une analyse à haut débit. Il est possible alors d'acquérir en un temps réduit un grand nombre de mesures. On peut atteindre par exemple un débit d'analyse de 100 bactéries analysées par minute.

La préparation des échantillons selon l'invention est compatible avec une mesure par balayage d'une ligne d'illumination (également appelée Line-scan) qui permet également de réaliser des mesures simultanément.

Grâce au procédé de préparation d'échantillons selon l'invention, un grand jeu de données peut être disponible, en effet on peut disposer de milliers de spectres, ce qui permet d'obtenir une analyse robuste, i.e. qui prend en compte la variabilité inter-individu en une seule mesure. Ce grand nombre de spectres acquis peut être considéré comme une base de référence, le procédé est donc autoréférencé et ne requiert pas de disposer d'une base de données de référence construite antérieurement, et de rechercher les événements rares (désignés également « outliers »), par exemple les pathogènes.

Grâce à l'invention, la résolution spatiale est alors déterminée par le pas de la structure, Cela simplifie l'automatisation et le processus de mise au point automatique.

Du fait des mesures simultanées, le temps d'acquisition des données par analyse Raman est générique, indépendant de la concentration en bactéries.

Un exemple de procédé de réalisation du support d'assemblage en quartz va maintenant être décrit.

Le procédé comporte à partir d'un substrat en quartz :
- une étape de lithographie pour délimiter les zones où vont être réalisés les motifs en creux,
- une étape de gravure de sorte à former les motifs en creux et de retrait de la résine de la lithographie,
- une étape de fonctionnalisation : on réalise un dépôt d'Optool® sur le substrat en quartz gravé par exemple en disposant le substrat dans un bain d'Optool® à 1 :1000 dans du perfluoro hexane. Le substrat est ensuite disposé dans un bain-marie à 65 °C pendant 60 min. le substrat est ensuite rincé,
- une étape de découpe de sorte à former des supports, les dimensions des supports sont par exemple comprises en 7x7 mm² et 13x13 mm².

Un exemple de procédé d'assemblage va maintenant être décrit :
Une solution de Triton X-100 est ajoutée à la solution contenant les bactéries à analyser afin de compenser l'hydrophobie de la fonctionnalisation à l'Optool.

Le support est préalablement rincé par exemple dans un bain d'acétone, puis à l'isopropanol et enfin il est séché.

Le dispositif D est monté sur le support S, la solution contenant les bactéries est injectée dans le dispositif. Ensuite la solution est évaporée par exemple en fixant la température du support à 35°C et imposant un débit d'aspiration de 30 ml/min de l'air situé dans la cavité. La durée d'évaporation du liquide dépend des valeurs de température et de débit d'aspiration imposées. Pour un volume de 90 µl, la durée peut varier d'environ 20 min à 4 h. Dans le cas présent, dans lequel la température est de 35°C et le débit d'aspiration est de 30 ml/min, la durée de l'évaporation est de l'ordre de 2h.

Lorsque les bactéries ont été assemblées, la mesure Raman peut avoir lieu.

Le support avec les bactéries assemblées est mis en place sur le porte-échantillon du système d'analyse.

Le répartition géométriques des motifs creux est rentrée dans le système ou est détecté automatiquement.

Le système peut, soit illuminer séquentiellement chaque motif creux et obtenir des informations sur la bactérie qu'il contient, soit illuminer plusieurs motifs simultanément par exemple 50 à 100.

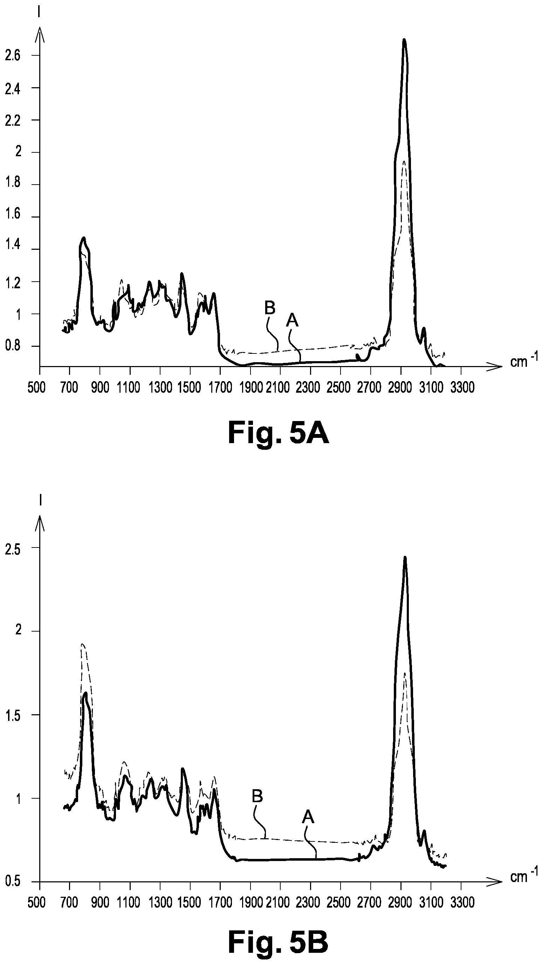

Les représentations graphiques des figures 5A et 5B montrent les signatures (courbe A) obtenues pour des bactéries assemblées sur un support selon l'invention et les signatures (courbe D) de bactéries obtenues pour des bactéries déposées sur un support suivant le procédé de l'état de la technique par évaporation d'une goutte sur un support non structuré. L'intensité I exprimée en unités arbitraires est représentée en fonction du nombre d'onde exprimé en cm⁻¹.

Les mesures sont faites pour une bactérie et pour un temps d'acquisition de 10 s.

Sur la figure 5A, il s'agit de bactéries *B*. *subtilis.* La courbe A résulte de la moyenne de 24 spectres et la courbe B résulte de la moyenne de 105 spectres.

Sur la figure 5B, il s'agit de bactéries *E. coli.* La courbe A résulte de la moyenne de 22 spectres et la courbe D résulte de la moyenne de 61 spectres.

On constate que la forme des signatures, du rapport signal à bruit et de la variance sont comparables. Par exemple les rapports signal à bruit au pic 1445 cm⁻¹ pour les courbes A et D ont été calculés ils sont du même ordre de grandeur. Sur la représentation graphique de la figure 5A, le rapport est de 11,4 pour la courbe D et de 11,9 pour la courbe A et sur la représentation graphique de la figure 5B, le rapport est de 13,8 pour la courbe D et de 10,94 pour la courbe A.

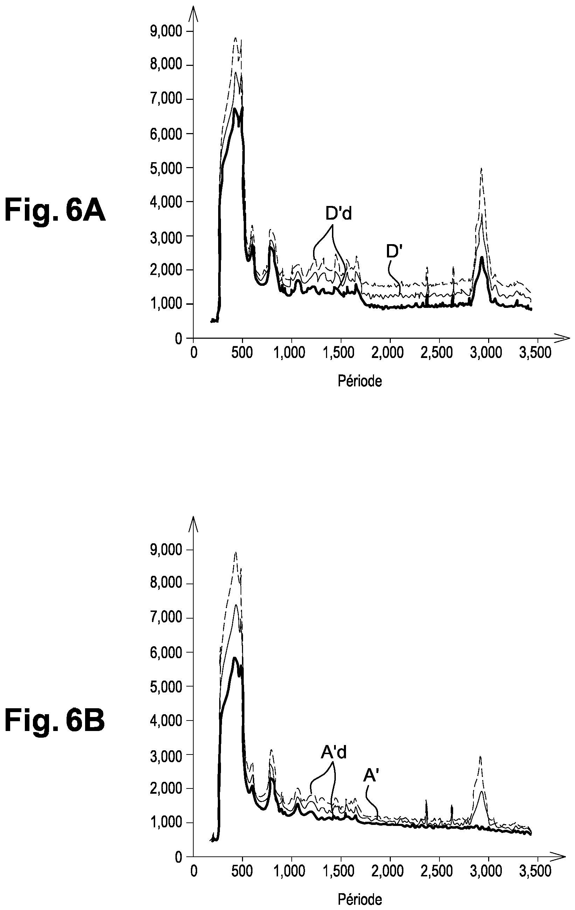

Sur les figures 6A à 6F, on peut voir d'autres représentations graphiques des signatures. Des bactéries *E. coli, B. subtilis* et *B*. *cereus* respectivement assemblées sur support selon l'invention (courbes A') et déposées sur un substrat par évaporation d'un goutte sans maîtrise de l'évaporation (courbes D').

L'axe des ordonnées représente l'intensité ou l'amplitude (nombre de coups).

Les courbes A'd et D'd sont les déviations standards.

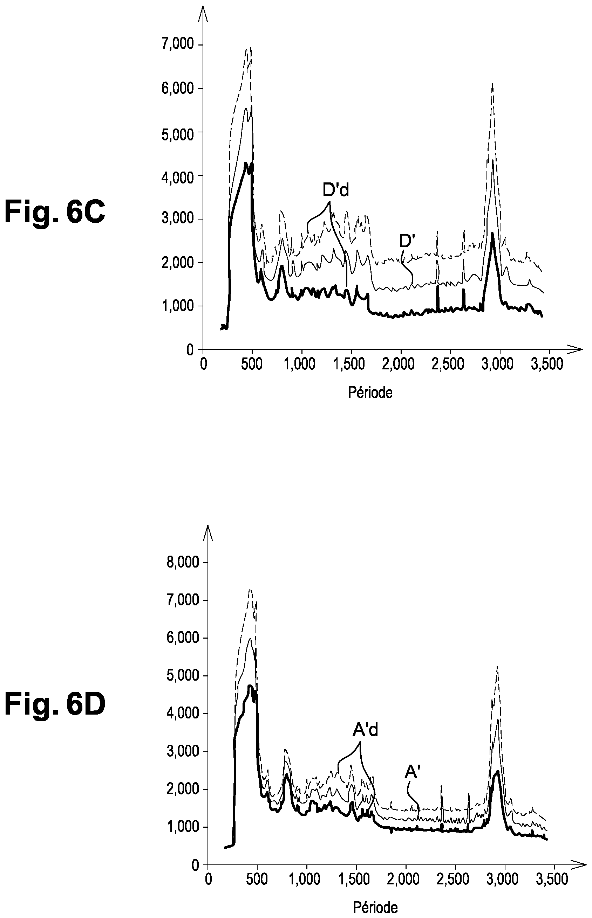

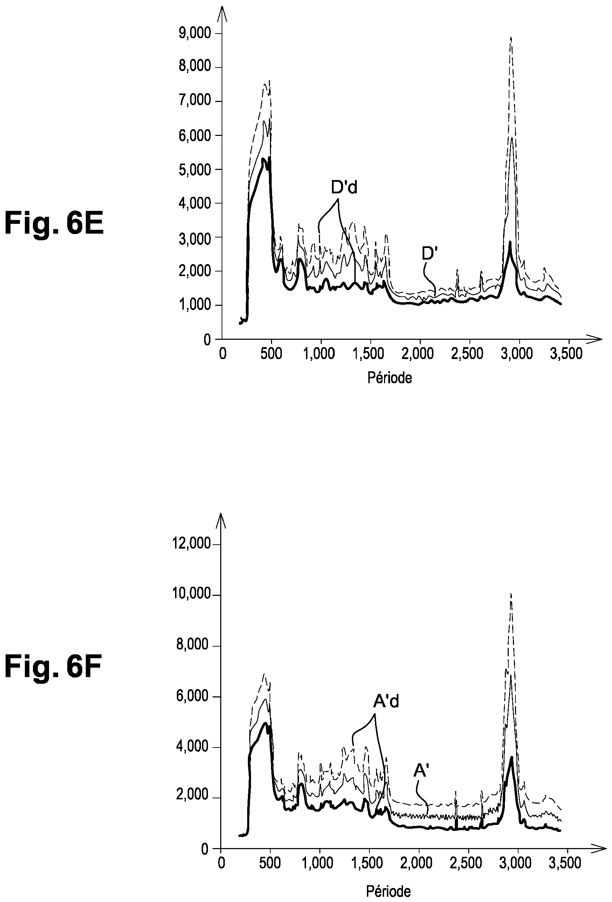

Les représentations graphiques des figures 6A, 6C et 6E ont été réalisées à partir de 10 spectres et celles des figures 6B, 6D et 6F ont été réalisées à partir de 20, 21 et 20 spectres respectivement. On constate que les spectres sont très proches.

Le procédé de préparation d'échantillons de bactéries selon l'invention est donc adapté à l'analyse par Spectrométrie Raman.

En outre il permet une réalisation rapide de mesures sur un grand nombre de bactéries.

## Revendications

1. Procédé de préparation d'un échantillon de microorganismes en vue d'une analyse par spectrométrie Raman comportant les étapes :
a) fourniture d'un support (S) plan comportant une première face (4) et des motifs en creux dans la première face, lesdits motifs en creux (6) étant répartis dans la première face selon une disposition donnée, le support plan étant en quartz et sa première face (4) comportant un traitement à l'Optool®,
b) assemblage des microorganismes dans les motifs en creux (6) du support par force de capillarité, lors duquel un dispositif d'assemblage (D) est mis en place sur le support (S), délimitant avec celui-ci une cavité (8) de sorte que les motifs en creux (6) soient disposés à l'intérieur de la cavité (8), une solution liquide contenant les microorganismes (B) est injectée dans la cavité (8) et une évaporation contrôlée de la solution liquide est effectuée, la solution liquide comportant un composé permettant d'obtenir un angle de reculée entre 30° et 50° avec la première face.

2. Procédé de préparation selon la revendication 1, dans lequel lors de l'étape b), le support (S) est à une température donnée et l'air contenu dans la cavité est aspiré.

3. Procédé de préparation selon la revendication 1 ou 2, dans lequel la solution liquide comporte du Triton X-100®.

4. Procédé de préparation selon la revendication 1 ou 2, dans lequel la solution liquide un mélange de sodium dodecyl sulfate (SDS) et de Triton X-45 ™

5. Procédé de préparation selon l'une des revendications 1 à 4, dans lequel le support (S) comporte au moins des premiers motifs d'une première taille, et des deuxièmes motifs d'une deuxième taille, la première taille étant inférieure à la deuxième taille.

6. Procédé de préparation selon la revendication 5, dans lequel les premiers motifs et deuxièmes motifs sont répartis dans le support de telle sorte que lors de l'évaporation contrôlée de la solution liquide, les microorganismes (B) sont assemblés en premier dans les premiers motifs.

7. Procédé de préparation selon la revendication 5 ou 6, dans lequel le support comporte n groupes de motifs (6.1, 6.2, 6.3), les motifs de chaque groupe ayant une taille différente de celle des autres motifs, dans lequel les n motifs sont répartis dans le support selon un ordre de taille croissant ou décroissant et dans lequel ledit support est mis en place de sorte que lors de l'évaporation contrôlée, l'assemblage des microorganismes (B) s'effectue successivement dans chaque groupe de motifs (6.1, 6.2, 6.3) dans le sens des tailles croissantes.

8. Procédé de préparation selon l'une des revendications 1 à 7, dans lequel le support (S) comporte des motifs en creux (6) de forme rectangulaire et présentant une longueur et une largeur, lesdits motifs étant délimités par des bords, les bords en regard de deux motifs en creux (6) adjacents étant distants d'une distance égale à au moins 5 fois la longueur des motifs en creux (6), ou des motifs en creux (6) de forme circulaire présentant un diamètre et comportant un bord extérieur, les bords en regard de deux motifs (6) adjacents étant distants d'une distance égale à au moins 5 fois le diamètre des motifs en creux (6).

9. Procédé de préparation selon l'une des revendications 1 à 8, dans lequel les dimensions des motifs en creux (6) dans un plan moyen du support (S) sont déterminées de sorte à ne recevoir qu'une bactérie et /ou dans lequel chaque motif en creux (S) a une dimension dans une direction perpendiculaire à un plan moyen du support (S) au moins égale à la demi-hauteur de bactéries à assembler.

10. Procédé de préparation selon l'une des revendications 1 à 9, dans lequel au moins une des dimensions des motifs en creux (6) dans un plan moyen du support (S) est supérieure ou égale à 2 µm.

11. Procédé d'analyse Raman de bactéries comportant
- la préparation d'un échantillon de bactéries mettant en œuvre le procédé selon l'une des revendications précédentes,
- la mise en place de l'échantillon dans un système d'analyse par spectrométrie Raman selon une orientation donnée,
- l'illumination d'un ou plusieurs motifs pour l'analyse Raman, avantageusement l'illumination d'un ou plusieurs motifs étant automatique.
- la mesure de la lumière émise par les bactéries contenues dans le ou les motifs

12. Procédé d'analyse selon la revendication 11, dans lequel l'illumination d'un ou plusieurs motifs comporte l'illumination simultanée de plusieurs motifs ou l'illumination successive de chaque motif.

13. Procédé d'analyse selon la revendication 11 ou 12, comportant l'étape supplémentaire d'établissement d'une base de données ou de comparaison des mesures obtenues à ceux d'une base de données pour identifier la ou les bactéries analysées.

## Patentansprüche

1. Verfahren zur Herstellung einer Probe von Mikroorganismen im Hinblick auf eine Analyse mittels Ramanspektrometrie, unfassend die folgenden Schritte:
a) Bereitstellen eines flachen Trägers (S), der eine erste Fläche (4) und Hohlmotive in der ersten Fläche umfasst, wobei die Hohlmotive (6) in der ersten Fläche gemäß einer gegebenen Anordnung verteilt sind, wobei der flache Träger aus Quarz ist und seine erste Fläche (4) eine Behandlung mit Optool® umfasst,
b) Anbringen der Mikroorganismen in den Hohlmotiven (6) des Trägers durch Kapillarkraft, während eine Anbringungsvorrichtung (D) auf dem Träger (S) platziert wird, die mit diesem einen Hohlraum (8) derart begrenzt, dass die Hohlmotive (6) im Inneren des Hohlraums (8) angeordnet sind, wobei eine flüssige Lösung, die die Mikroorganismen (B) enthält, in den Hohlraum (8) injiziert wird und eine kontrollierte Verdampfung der flüssigen Lösung bewirkt wird, wobei die flüssige Lösung eine Verbindung enthält, die es erlaubt, einen Rückzugswinkel zwischen 30° und 50° mit der ersten Fläche zu erhalten.

2. Herstellungsverfahren nach Anspruch 1, bei dem während des Schritts b) der Träger (S) auf einer gegebenen Temperatur ist, und die in dem Hohlraum enthaltene Luft abgesaugt wird.

3. Herstellungsverfahren nach Anspruch 1 oder 2, bei dem die flüssige Lösung Triton X-100® umfasst.

4. Herstellungsverfahren nach Anspruch 1 oder 2, bei dem die flüssige Lösung eine Mischung von Natriumdodecylsulfat (SDS) und von Triton X-45™ umfasst.

5. Herstellungsverfahren nach einem der Ansprüche 1 bis 4, bei dem der Träger (S) wenigstens erste Motive mit einer ersten Größe und zweite Motive mit einer zweiten Größe umfasst, wobei die erste Größe kleiner ist als die zweite Größe.

6. Herstellungsverfahren nach Anspruch 5, bei dem die ersten Motive und die zweiten Motive in dem Träger derart verteilt sind, dass während der gesteuerten Verdampfung der flüssigen Lösung die Mikroorganismen (B) zuerst in den ersten Motiven angeordnet werden.

7. Herstellungsverfahren nach Anspruch 5 oder 6, bei dem der Träger n Gruppen von Motiven (6.1, 6.2, 6.3) umfasst, wobei die Motive jeder Gruppe eine Größe haben, die von jener der anderen Motive verschieden ist, wobei die n Motive in dem Träger gemäß einer Reihenfolge mit zunehmender oder abnehmender Größe verteilt sind, und wobei der Träger derart platziert wird, dass während der kontrollierten Verdampfung die Anbringung der Mikroorganismen (B) sukzessive in jeder Gruppe von Motiven (6.1, 6.2, 6.3) in der Richtung der zunehmenden Größen erfolgt.

8. Herstellungsverfahren nach einem der Ansprüche 1 bis 7, bei dem der Träger (S) Hohlmotive (6) mit rechteckiger Form umfasst, die eine Länge und eine Breite aufweisen, wobei die Motive durch Ränder begrenzt sind, wobei die gegenüberliegenden Ränder von zwei benachbarten Hohlmotiven (6) in einem Abstand voneinander beabstandet sind, der wenigstens gleich 5 Mal die Länge der Hohlmotive (6) ist, oder kreisförmige Hohlmotive (6), die einen Durchmesser aufweisen und einen Außenrand umfassen, wobei die gegenüberliegenden Ränder von zwei benachbarten Motiven (6) in einem Abstand voneinander beabstandet sind, der wenigstens gleich 5 Mal der Durchmesser der Hohlmotive (6) ist.

9. Herstellungsverfahren nach einem der Ansprüche 1 bis 8, bei dem die Abmessungen der Hohlmotive (6) in einer mittleren Ebene des Trägers (S) derart bestimmt sind, dass sie nur ein Bakterium aufnehmen, und/oder bei dem jedes Hohmotiv (6) eine Abmessung in einer Richtung orthogonal zu einer mittleren Ebene des Trägers (S) wenigstens gleich der halben Höhe der anzuordnenden Bakterien hat.

10. Herstellungsverfahren nach einem der Ansprüche 1 bis 9, bei dem wenigstens eine der Abmessungen der Hohlmotive (6) in einer mittleren Ebene des Trägers (S) größer oder gleich 2 µm ist.

11. Verfahren zur Ramananalyse von Bakterien, umfassend:
- die Herstellung einer Probe von Bakterien unter Verwendung des Verfahrens nach einem der vorhergehenden Ansprüche,
- die Platzierung der Probe in einem System zur Analyse mittels Ramanspektrometrie gemäß einer gegebenen Orientierung,
- die Bestrahlung eines oder mehrerer Motive für die Ramananalyse, wobei die Bestrahlung eines oder mehrerer Motive vorzugsweise automatisch ist,
- die Messung des Lichts, das von den Bakterien emittiert wird, die in dem oder den Motiven enthalten sind.

12. Analyseverfahren nach Anspruch 11, bei dem die Bestrahlung eines oder mehrerer Motive die gleichzeitige Bestrahlung von mehreren Motiven oder die sukzessive Bestrahlung jedes Motivs umfasst.

13. Analyseverfahren nach Anspruch 11 oder 12, umfassend den zusätzlichen Schritt der Erstellung einer Datenbank oder des Vergleichs der erhaltenen Messungen mit jenen einer Datenbank zum Identifizieren des oder der analysierten Bakterien.

## Claims

1. Method for preparing a sample of microorganisms with a view to analysis by Raman spectrometry, comprising the steps of:
a) providing a flat support (S) comprising a first face (4) and hollow patterns in the first face, said hollow patterns (6) being distributed in the first face in a given arrangement, the flat support being made from quartz and the first face (4) thereof comprising a treatment with Optool®,
b) assembling the microorganisms in the hollow patterns (6) of the support by capillary force, during which an assembly device (D) is placed on the support (S), delimiting therewith a cavity (8) so that the hollow patterns (6) are disposed inside the cavity (8), a liquid solution containing the microorganisms (B) is injected into the cavity (8) and a controlled evaporation of the liquid solution is carried out, the liquid solution comprising a compound making it possible to obtain a receding angle of between 30° and 50° with the first face.

2. Preparation method according to claim 1, wherein, during step b), the support (S) is at a given temperature and the air contained in the cavity is aspirated.

3. Preparation method according to claim 1 or claim 2, wherein the liquid solution comprises Triton X-100®.

4. Preparation method according to claim 1 or claim 2, wherein the liquid solution a mixture of sodium dodecyl sulfate (SDS) and Triton X-45™.

5. Preparation method according to any of claims 1 to 4, wherein the support (S) comprises at least one of the first patterns of a first size, and second patterns of a second size, the first size being less than the second size.

6. Preparation method according to claim 5, wherein the first patterns and second patterns are distributed in the support so that, during a controlled evaporation of the liquid solution, the microorganisms (B) are assembled first in the first patterns.

7. Preparation method according to claim 5 or claim 6, wherein the support comprises n groups of patterns (6.1, 6.2, 6.3), the patterns in each group having a size different from that of the other patterns, wherein the n patterns are distributed in the support in an increasing or decreasing order of size and wherein said support is placed so that, during the controlled evaporation, the assembly of the microorganisms (B) takes place successively in each group of patterns (6.1, 6.2, 6.3) in the direction of increasing sizes.

8. Preparation method according to any of claims 1 to 7, wherein the support (S) comprises rectangular-shaped hollow patterns (6) having a length and a width, said patterns being delimited by edges, the facing edges of two adjacent hollow patterns (6) being distant by a distance equal to at least five times the length of the hollow patterns (6), or hollow patterns (6) with a circular shape having a diameter and comprising an outer edge, the facing edges of two adjacent patterns (6) being distant by a distance equal to at least five times the diameter of the hollow patterns (6).

9. Preparation method according to any of claims 1 to 8, wherein the dimensions of the hollow patterns (6) in a mid-plane of the support (S) are determined so as to receive only one bacterium and/or wherein each hollow pattern (S) has a dimension in a direction perpendicular to a mid-plane of the support (S) at least equal to the half-height of the bacteria to be assembled.

10. Preparation method according to any of claims 1 to 9, wherein at least one of the dimensions of the hollow patterns (6) in a mid-plane of the support (S) is greater than or equal to 2 µm.

11. Method for the Raman analysis of bacteria, comprising
- the preparation of a sample of bacteria using the method according to any of the preceding claims,
- the placing of the sample in a Raman spectrometry analysis system in a given orientation,
- the illumination of one or more patterns for Raman analysis, advantageously the illumination of one or more patterns being automatic,
- the measurement of the light emitted by the bacteria contained in the pattern or patterns.

12. Analysis method according to claim 11, wherein the illumination of one or more patterns comprises the simultaneous illumination of a plurality of patterns or the successive illumination of each pattern.

13. Analysis method according to claim 11 or claim 12, comprising the additional step of establishing a database or comparing the measurements obtained with those of a database in order to identify the bacterium or bacteria analysed.
